# EUROPEAN PATENT SPECIFICATION

(11) **EP 4 390 120 B1**
(45) Date of publication and mention of the grant of the patent: **20.05.2026**
(21) Application number: 22215852.9
(22) Date of filing: 22.12.2022
(51) Int. Cl.: F03D 17/00, F03D 7/02, F03D 7/04

(54) **A METHOD AND AN APPARATUS FOR COMPUTER-IMPLEMENTED MONITORING OF A WIND TURBINE**
VERFAHREN UND VORRICHTUNG ZUR COMPUTERIMPLEMENTIERTEN ÜBERWACHUNG EINER WINDTURBINE
PROCÉDÉ ET APPAREIL DE SURVEILLANCE MISE EN OEUVRE PAR ORDINATEUR D'UNE ÉOLIENNE

(43) Date of publication of application: 26.06.2024
(73) Proprietor: Siemens Gamesa Renewable Energy A/S, 7330 Brande (DK)
(72) Inventor: Gamberini, Andrea, 2000 Frederiksberg (DK)
(74) Representative: SGRE-Association

(56) References cited:
- EP-A1- 3 667 080
- EP-A1- 3 667 082
- SI YULIN ET AL: "A data-driven approach for fault detection of offshore wind turbines using random forests", IECON 2017 - 43RD ANNUAL CONFERENCE OF THE IEEE INDUSTRIAL ELECTRONICS SOCIETY, IEEE, 29 October 2017 (2017-10-29), pages 3149 - 3154, XP033280029, DOI: 10.1109/IECON.2017.8216532
- KORDESTANI MOJTABA ET AL: "A New Hybrid Fault Prognosis Method for MFS Systems Based on Distributed Neural Networks and Recursive Bayesian Algorithm", IEEE SYSTEMS JOURNAL, IEEE, US, vol. 14, no. 4, 12 May 2020 (2020-05-12), pages 5407 - 5416, XP011821966, ISSN: 1932-8184, [retrieved on 20201123], DOI: 10.1109/JSYST.2020.2986162

## Description

The invention refers to a method and an apparatus for computer-implemented monitoring of a wind turbine having one or more active flow control devices (AFCD).

Wind turbines of wind farms comprise an upper section with a rotor being rotatable around a horizontal rotor axis and a nacelle on the top of a tower, where the upper section can be rotated around a vertical yaw axis in order to vary the yaw angle of the respective turbine. The wind turbine is usually controlled such that the rotor of the wind turbine faces the wind thereby maximizing production of electric energy. To do so, different sensors are installed on the respective wind turbine to estimate, for example, wind speed and wind directions. The measurements provided by the sensors enable aligning the rotor with the wind direction.

In order to maximize production of electric energy, flow control of the rotor and its rotor blades is of importance. To modify the air flow around a body in a desired way, flow control devices (FCD) are known. Generally, FCDs are applied to aerodynamic bodies to modify the aerodynamic response of them, such as to increase or decrease aerodynamic forces, energize the aerodynamic flow, trigger flow transmission, reattach the flow etc. Those FCDs are commonly used at wings of airplanes and blades of elicopters. In particular, active flow control devices (AFCD) are used in airplanes.

AFCDs are flow control devices which are actively controlled and actuated to modify and control the aerodynamic flow. A plurality of AFCDs is known, such as active trailing edge flaps, active spoilers, active gurney flaps, active leading-edge flaps, active suction systems etc.

The principle of AFCDs could be beneficially used in wind turbines as well, in order to reduce loads, improve aerodynamic performance and power, reduce blade instabilities (like fluttering), and reduce noise. However, up to now there are no real commercial applications of them as a plurality of technical challenges must be met. AFCDs being developed for rotor blades of wind turbines generally have a small section size compared to the blade section where they are installed and they are generally placed on the outer part of the blade, such as a leading edge or a trailing edge, thereby covering a long length of it.

To ensure expected performance of the AFCD, a wind turbine controller needs to be able to monitor and evaluate the status and performance of the AFCD and to identify the condition of a AFCD fault. A fault may be, for example, the device not working, stuck in a fixed position, detached from its location, and so on. Preferably, also an AFCD degraded performance should be monitored, such as a reduced motion of the device, slower activation or de-activation, and so on.

The monitoring of the performance of an AFCD is extremely complex and difficult due to the location and size of the AFCD, the environment of the wind turbine and mechanical and electrical circumstances. Due to its location in the outer part of the blade, far from the hub in a highly dynamic environment, and due to the long spanwise extension of the AFCD, its global state cannot be monitored with a single sensor or a small number of local sensors. This is true for monitoring deflection or pressure variation at a specific blade section. Furthermore, the limited thickness compared to the blade section makes the remotely monitoring of the device behavior in highly dynamic environment of the wind turbine blade unpractical.

AFCDs of wind turbines can be monitored by remote cameras, determining a deflection or translation of the blades, or by local pressure or deflection sensors installed on each rotor blade itself or on its surrounding. However, due to the strictly limit use of standard wiring to supply power and communication for reading sensor measurements either wireless sensor systems are required or measurement is not possible.

EP 3 667 082 A1 discloses a method for detecting the operative status of an aerodynamic device for influencing the airflow flowing from the leading edge of a rotor blade for a wind turbine to the trailing edge of the rotor blade, the aerodynamic device being movable by an actuator between a first protruded configuration and a second retracted configuration. The method comprises the steps of measuring a temporal course of an operational value of the wind turbine, comparing the measured temporal course of the operational value with a desired temporal course of an operational value, and deriving an operative status of the aerodynamic device. The measuring and comparing steps are performed during activation or deactivation of the actuator of the aerodynamic device.

SI YULIN ET AL: "A data-driven approach for fault detection of offshore wind turbines using random forests", IECON 2017 - 43RD ANNUAL CONFERENCE OF THE IEEE INDUSTRIAL ELECTRONICS SOCIETY, IEEE, 29 October 2017, pages 3149-3154 discloses to employ a data-driven based fault recognition method for checking a wind turbine actuator.

KORDESTANI MOJTABA ET AL: "A New Hybrid Fault Prognosis Method for MFS Systems Based on Distributed Neural Networks and Recursive Bayesian Algorithm", IEEE SYSTEMS JOURNAL, IEEE, US, vol. 14, no. 4, 12 May 2020, pages 5407-5416 discloses a prognosis method to predict a remaining useful lifetime (RUL) of multifunctional spoiler (MFS) systems, considering a large number of techniques consisting of neural network (NN), adaptive neuro-fuzzy inference system (ANFIS), support vector machine (SVM), and regression methods, as well as knowledge-based methods or Bayesian method.

EP 3 667 080 A1 discloses a wind turbine including at least a rotor blade comprising an aerodynamic device for influencing the airflow flowing from the leading edge section of the rotor blade to the trailing edge section of the rotor blade, wherein the aerodynamic device is mounted at a surface of the rotor blade, a pressure supply system for providing a pressurized fluid for operating the aerodynamic device between a first protruded configuration and a second retracted configuration, and a monitor unit for monitoring a pressure and/or a flow rate of the pressurized fluid. The monitoring unit is configured for receiving a measured pressure and/or flow rate signal in at least one section of the pressure supply system, and deriving an operative status of the aerodynamic device based on the measured pressure and/or flow rate signal.

It is an object of the present invention to provide an easy and reliable method in order to allow monitoring of active flow control devices on wind turbine rotor blades.

This object is solved by the independent claims. Preferred embodiments of the invention are defined in the dependent claims.

The invention provides a method for computer-implemented monitoring of a wind turbine. The wind turbine comprises an upper section on top of a tower, the upper section being pivotable around a vertical yaw axis and having a nacelle and a rotor with rotor blades. The rotor is attached to the nacelle and the rotor blades are provided with an active flow control device and are rotatable by wind around horizontal rotor axis.

According to the method of the invention, the following steps i) and ii) are performed at each time point of one or more time points during the operation of the wind turbine.

In step i), digital operation data of the wind turbine are obtained. The term "obtaining operation data" means that the operation data are received by a processor implementing the method of the invention. The operation data comprise current sensor data taken by a plurality of sensors installed on the wind turbine or in the vicinity thereof, and a control signal for controlling the active control device (AFCD) to adopt a specific state of the flow control device. The term "current sensor data" and "current control signal" means up-to-date sensor data and an up-to-date-signal.

In step ii), an estimate of the state and/or performance degradation of the active flow control device is determined by processing the operation data by a trained data driven model, where the operation data are fed as a digital input to the trained data driven model and the trained data driven model provides the estimate and/or performance degradation of the active flow control device as a digital output.

In step iii), the method of the invention generates control commands for the wind turbine so that the controlling of the active flow control device is properly included in the wind turbine control strategy in order to eliminate undesired operation states resulting from an unexpected behavior of the active flow control device.

The method of the invention provides an easy and straightforward method for determining an estimate of the state and/or performance degradation of the active flow control device. To do so, a trained data driven model is used. This model is trained by training data comprising a plurality of data sets consisting of operational data, i.e. sensor data of a plurality of sensors installed on the wind turbine or in the vicinity thereof, and a control signal for controlling the active flow control device, together with the information about a class of the state and/or performance degradation. The training data can be from real wind turbine data, from computer simulations or from a combination of both.

Any known data driven model being learnt by machine learning may be used in the method according to the invention. In a particularly preferred embodiment, the data driven model is based on a random forest classification or a regressor model. Nevertheless, other trained data driven models may also be implemented in the method of the invention.

In a preferred embodiment of the invention, the sensor data comprise data available on a wind turbine for control purposes of the wind turbine regarding yaw and/or pitch angle, rotation speed of the rotor, generated power or generated torque. Generally, the sensor data comprises common "standard" sensor data that are used to control the wind turbine in a standard way.

In particularly preferred embodiment, the sensor data comprise a rotor speed, a pitch position of the rotor blades, a generate torque or generator power, and one or more rotor blade moments. Nevertheless, further sensor data may be used as well as operation data.

In another particularly preferred embodiment, the state of the active flow control device comprises an information about the active flow control device being healthy or faulty. In particular, the state may comprise a further information whether the active flow control device is active or not active.

In another particularly preferred embodiment, the performance degradation of the active flow control device comprises one of a plurality of categories, each category representing a bandwidth of performance or performance degradation of the active flow control device. For example, one category may refer to an active state having a fault, but still having a performance between 0% and 25%, 25% and 50%, 50% and 75% and 75% and 100%. The number of categories may vary from the example given above. Alternatively, the categories made refer to a not active state having a fault at the same time with a remaining performance between 0% and 25%, 25% and 50%, 50% and 75% and 75% and 100%. As above, the number of categories may vary.

Generating control commands for the wind turbines so that the controlling of the active flow control device is properly included in the wind turbine control strategy enables an automatic controlling of blade load, power, reduction of blade instabilities, and noise control.

Besides the above method, the invention refers to apparatus for computer-implemented monitoring of a wind turbine where the apparatus is configured to perform a method according to the invention or one or more preferred embodiments of the method according to the invention.

Moreover, the invention refers to a computer program product with a program code, which is stored on a non-transitory machine-readable carrier, for carrying out the method according to the invention or one or more preferred embodiments thereof when the program code is executed on a computer.

An embodiment of the invention will now be described in detail with respect to the accompanying drawings.
- Fig. 1: is a schematic illustration of a rotor blade showing possible locations of an active flow control device.
- Fig. 2: is a diagram illustrating the training phase of a data driven model for executing a method according to the invention.
- Fig. 3: is a diagram illustrating a controller for performing an embodiment of the invention.

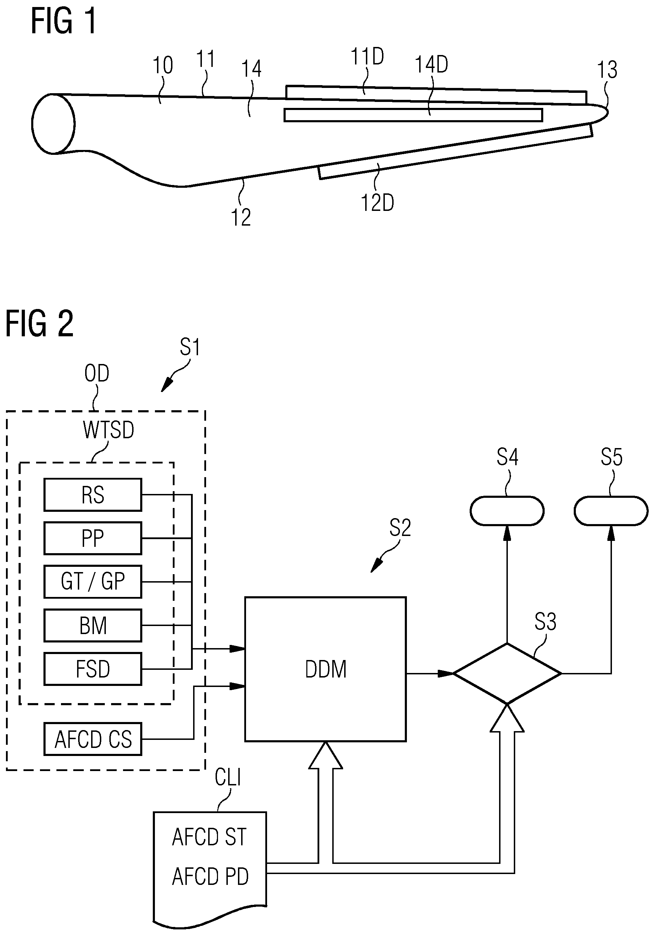

Fig. 1 shows a schematic illustration of a single rotor blade 10. The rotor blade 10 extends from its hub on the left side to its tip 13 on the right side. The rotor blade 10 comprises a leading edge 11 and a trailing edge 12.

By way of example only, an active flow control device (AFCD) 11D may be located on the leading edge 11, extending far from the hub towards the tip 13. The leading edge AFCD 11D may be, for example, a flexible leading edge flap being adapted to change its curvature. Alternatively, blow and suction actuators or synthetic jets may be realized as leading edge flow control device 11D.

As an alternative to the leading edge AFCD 11D, an AFCD 12D may be located at the trailing edge 12, which is located in the outer part of the blade 10, far from the hub extending towards the tip 13. The trailing edge AFCD 12D may be a split flap, a rigid flap, a flexible trailing edge flap, and so on.

Alternatively or additionally to the AFCDs 11D, 12D, a further active flow control device 14D may be located on a rotor surface 14. Typically, the location of the AFCD 14D is in the outer part of the blade 10, far from the hub extending towards the tip 13. The surface AFCD 14D may be realized as a stall rib, an inclined spoiler or a plasma actuator.

It is to be understood that the AFCDs 11D, 12D, 14D schematically illustrated in Fig. 1 are only exemplary. If in the following the term "AFCDs" is used, one or more of the AFCDs 11D, 12D, 14D is to be understood. Generally, the AFCDs 11D, 12D, 14D are actively controlled and actuated to modify and control the aerodynamic flow around the rotor blade 10 and its rotor surface 14.

As monitoring of the performance of the AFCDs 11D, 12D, 14D by means of using one or more sensors is extremely complex and difficult, it is suggested to estimate the state and performance degradation of the AFCDs by not using a dedicated sensor or group of dedicated sensors but instead by means of a data driven model that estimates the state and/or performance degradation of the AFCDs 11D, 12D, 14D.

Even small misalignments of the intended position of the AFCDs 11D, 12D, 14D leads to losses of electric power produced by the wind turbine or leads to high loads on the rotor blade 10. The method as described in the following provides an easy method to detect and correct control parameters of the wind turbine.

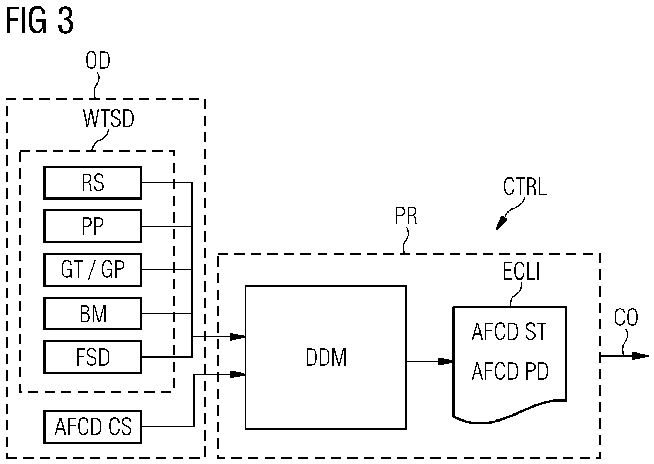

To do so, the wind turbine, which is not shown in detail, comprises a plurality of sensors, such as a sensor for rotor speed RS, a sensor for pitch position PP, a sensor for generator torque GT, a sensor for generator power GP, or one or more sensors for a respective blade moment BM. The latter takes into account that usually every blade has at least two sensors at the blade root measuring the two bending moments. Besides the sensors for providing the above-mentioned signals, further sensors may be provided to provide further sensor data FSD. The totality of sensor data corresponds to wind turbine sensor data WTSD. The wind turbine sensor data WTSD and a control signal AFCD CS for controlling the AFCDs 11D, 12D, 14D represent operational data OD and are obtained on a regular time basis (Figs. 2 and 3).

The wind turbines standard signals WTSD are used for general control purposes of the wind turbine, for example regarding yaw angle and/or pitch angle, rotation speed of the rotor, generated power or generated torque, and so on. The control signal AFCD CS is used to control the AFCD 11D, 12D, 14D to modify the air flow around the rotor blade 10 in a desired manner. The specific position of the AFCD 11D, 12D, 14D will primarily result in different blade moments BM.

The respective operational data OD are transferred by a suitable communication link to a controller CTRL of the wind turbine (Fig 3). The controller CTRL comprises a processor PR implementing a trained data driven model DDM receiving the respective operational data OD as digital input and providing the estimate ECLI of the state AFCD ST and/or performance degradation AFCD PD of the AFCD 11D, 12D, 14D as a digital output.

The state AFCD ST of the active flow control device 11D, 12D, 14D comprises an information whether the active flow control device is inactive or active and, if active, whether it is working properly (healthy) or working improperly (faulty).

The performance degradation AFCD PD of the AFCD 11D, 12D, 14D comprises one of a plurality of categories representing the amount of performance degradation. Each category represents, for example, a bandwidth of performance or performance degradation the active flow control device 11D, 12D, 14D. The performance degradation AFCD PD comprises, for example, a class or a figure about how much the performance is less than expected (for example, 25%, 50%, 75%, 100%) or, if the active flow control device 11D, 12D, 14D should be inactive, but impacts the operation by 25%, 50%, 75%, 100%.

The trained data driven model DDM may be based on a random forest classification or a regressor model being learnt beforehand by training data. The training process is illustrated in Fig. 2.

The training data comprise a plurality of datasets of operational data OD consisting of wind turbine sensor data WTSD (RS, PP, GT/GP, BM, and optionally FSD, and AFCD CS) taken by sensors of the wind turbine and provided by an AFCD controller for controlling the AFCDs 11D, 12D, 14D together with an information CLI about the state AFCD ST and/or performance degradation AFCD PD. The operational data OD and the predefinded classes CLI are provided in step S1 to the data driven model DDM to be used, preferably a random forest classification or a regressor model. The operational data OD and the predefinded classes CLI are acquired by field measurements of a real wind turbine, from computer simulations of the wind turbine model or from a combination of both cases.

Random forest classification or regressor models are well known from the prior art and are particularly suitable for processing the operational data OD. The operational data OD and the classes CLI of the state AFCD ST and/or performance degradation AFCD PD are fed to the data driven model DDM (step S2).

In step S3 it is verified whether the output of the data driven model DDM with respect to the estimated state AFCD ST and/or performance degradation AFCD PD corresponds to the predefined class CLI assigned to a data set of the operational data OD. If the estimation is correct, the data driven model DDM is implemented (step S5). If the estimation in step S3 is not correct re-training of the data driven model DDM is conducted (step S4).

In the embodiment of Fig. 3, the estimated class ECLI of state AFCD ST and/or performance degradation AFCD PD determined by the data driven model DDM also results in control commands CO which are provided to the controller of the wind turbine in order to adjust its operation, for example by adapting yaw and/or pitch angle, rotation speed of the rotor, generated power or generated torque. Hence, the controller CTRL enables an automatic adjustment of the wind turbine to eliminate undesired operation states resulting from an unexpected behavior of the AFCDs 11D, 12D, 14D.

The invention as described in the foregoing has several advantages.

Particularly, an easy and straightforward method is provided in order to detect the state and/or performance of an AFCD. To do so, the data driven model is used which estimates the state and/or performance degradation from "standard" wind turbine signals or their statistical values. The data driven model output will be used to control the wind turbine to properly include the active flow control device in the overall wind turbine control strategy.

The data driven model may be trained by unsupervised training that can be achieved without providing the information of the state and/or performance of the active flow control device. Alternatively, continuous training may be applied in the training phase.

The data driven model may use the wind turbine sensor data to improve its training and compensate for potential variation of the wind turbine behavior, for example with respect to reduced aerodynamic performance due to component erosion, wear and tear, reduced electrical efficiency and so on.

Independent of the grammatical term usage, individuals with male, female or other gender identities are included within the term.

## Claims

1. A method for computer-implemented monitoring of a wind turbine, the wind turbine comprising an upper section on top of a tower, the upper section being pivotable around a vertical yaw axis and having a nacelle and a rotor with rotor blades (10), the rotor being attached to the nacelle and the rotor blades (10) being provided with an active flow control device (11D, 12D, 14D) and being rotatable by wind around a horizontal rotor axis, wherein at each time point of one or more time points during the operation of the wind turbine the following steps are performed:
i) obtaining digital operation data (OD) of the wind turbine, the operation data (OD) being current sensor data (WTSD) taken by a plurality of sensors installed on the wind turbine and a control signal (AFCD CS) for controlling the active flow control device (11D, 12D, 14D) to adopt a specific state;
ii) determining an estimate (ECLI) of the state and/or performance degradation of the active flow control device (11D, 12D, 14D)
**characterized in that**
- step ii) of determining an estimate (ECLI) of the state and/or performance degradation of the active flow control device (11D, 12D, 14D) comprises processing the operation data (OD) by a trained data driven model (DDM), where the operation data (OD) are fed as a digital input to the trained data driven model (DDM) and the trained data driven model (DDM) provides the estimate (ECLI) of the state and/or performance degradation of the active flow control device (11D, 12D, 14D) as a digital output; and
iii) generating control commands (CO) for the wind turbine so that the controlling of the active flow control device (11D, 12D, 14D) is properly included in the wind turbine control strategy in order to eliminate undesired operation states resulting from an unexpected behavior of the active flow control device (11D, 12D, 14D).

2. The method according to claim 1, wherein the trained data driven model (DDM) is based on a random forest classification or regressor model.

3. The method according to claim 1 or 2, wherein the sensor data (WTSD) comprise data available on the wind turbine for control purposes of the wind turbine regarding yaw and/or pitch angle, rotation speed of the rotor, generated power or generated torque.

4. The method according to one of the preceding claims, wherein the sensor data (WTSD) comprise a rotor speed (RS), a pitch position (PP) of the rotor blades (10), a generator torque or power (GT/GP), and one or more rotor blade moments (BM) .

5. The method according to one of the preceding claims, wherein the state (AFCD ST) of the active flow control device (11D, 12D, 14D) comprises an information about the active flow control device (11D, 12D, 14D) being healthy or faulty.

6. The method according to one of the preceding claims, wherein the performance degradation of the active flow control device (11D, 12D, 14D) comprises one of a plurality of categories, each category representing a bandwidth of performance or performance degradation of the active flow control device (11D, 12D, 14D).

7. An apparatus for computer-implemented monitoring of a wind turbine, the wind turbine comprising an upper section on top of a tower, the upper section being pivotable around a vertical yaw axis and having a nacelle and a rotor with rotor blades (10), the rotor being attached to the nacelle and the rotor blades (10) being provided with an active flow control device (11D, 12D, 14D) and being rotatable by wind around a horizontal rotor axis, wherein the apparatus comprises a processor (PR) configured to perform at each time point of one or more time points during the operation of the wind farm the following steps:
i) obtaining digital operation data (OD) of the wind turbine, the operation data (OD) being current sensor data (WTSD) taken by a plurality of sensors installed on the wind turbine and a control signal (AFCD CS) for controlling the active flow control device (11D, 12D, 14D) to adopt a specific state;
ii) determining an estimate (ECLI) of the state and/or performance degradation of the active flow control device (11D, 12D, 14D) by processing the operation data (OD) by a trained data driven model (DDM), where the operation data (OD) are fed as a digital input to the trained data driven model (DDM) and the trained data driven model (DDM) provides the estimate (ECLI) of the state and/or performance degradation of the active flow control device (11D, 12D, 14D) as a digital output; and
iii) generating control commands (CO) for the wind turbine so that the controlling of the active flow control device (11D, 12D, 14D) is properly included in the wind turbine control strategy in order to eliminate undesired operation states resulting from an unexpected behavior of the active flow control device (11D, 12D, 14D).

8. The apparatus according to claim 7, wherein the apparatus (4) is configured to perform a method according to one of claims 2 to 6.

9. A wind turbine comprising an upper section on top of a tower, the upper section being pivotable around a vertical yaw axis and having a nacelle and a rotor with rotor blades (10), the rotor being attached to the nacelle and the rotor blades (10) being provided with an active flow control device (11D, 12D, 14D) and being rotatable by wind around a horizontal rotor axis, wherein the wind turbine comprises an apparatus (4) according to claim 7 or 8.

10. A computer program product with program code, which is stored on a non-transitory machine-readable carrier, for carrying out a method according to one of claims 1 to 6 when the program code is executed on a computer.

## Patentansprüche

1. Verfahren zum computerimplementierten Überwachen einer Windturbine, wobei die Windturbine einen oberen Abschnitt auf einem Turm umfasst, wobei der obere Abschnitt um eine vertikale Gierachse schwenkbar ist und eine Gondel und einen Rotor mit Rotorschaufeln (10) aufweist, wobei der Rotor an der Gondel befestigt ist und wobei die Rotorschaufeln (10) mit einer Einrichtung (11D, 12D, 14D) zur aktiven Strömungssteuerung bereitgestellt sind und durch Wind um eine horizontale Rotorachse drehbar sind, wobei zu jedem Zeitpunkt eines oder mehrerer Zeitpunkte während des Betriebs der Windturbine die folgenden Schritte durchgeführt werden:
i) Erhalten von digitalen Betriebsdaten (OD) der Windturbine, wobei es sich bei den Betriebsdaten (OD) um aktuelle Sensordaten (WTSD), die durch eine Vielzahl von an der Windturbine installierten Sensoren erfasst werden, und ein Steuersignal (AFCD CS) zum Steuern der Einrichtung (11D, 12D, 14D) zur aktiven Strömungssteuerung, um einen konkreten Zustand anzunehmen, handelt;
ii) Bestimmen einer Schätzung (ECLI) des Zustands und/oder der Leistungsverschlechterung der Einrichtung (11D, 12D, 14D) zur aktiven Strömungssteuerung
**dadurch gekennzeichnet, dass**
- Schritt ii) des Bestimmens einer Schätzung (ECLI) des Zustands und/oder der Leistungsverschlechterung der Einrichtung (11D, 12D, 14D) zur aktiven Strömungssteuerung Verarbeiten der Betriebsdaten (OD) durch ein trainiertes datengetriebenes Modell (DDM) umfasst, wobei die Betriebsdaten (OD) als eine digitale Eingabe in das trainierte datengetriebene Modell (DDM) eingespeist werden und das trainierte datengetriebene Modell (DDM) die Schätzung (ECLI) des Zustands und/oder der Leistungsverschlechterung der Einrichtung (11D, 12D, 14D) zur aktiven Strömungssteuerung als eine digitale Ausgabe bereitstellt; und
iii) Erzeugen von Steuerbefehlen (CO) für die Windturbine, sodass das Steuern der Einrichtung (11D, 12D, 14D) zur aktiven Strömungssteuerung ordnungsgemäß in die Windturbinensteuerungsstrategie einbezogen wird, um unerwünschte Betriebszustände, die sich aus einem unerwarteten Verhalten der Einrichtung (11D, 12D, 14D) zur aktiven Strömungssteuerung ergeben, zu beseitigen.

2. Verfahren nach Anspruch 1, wobei das trainierte datengetriebene Modell (DDM) auf einem Random-Forest-Klassifikations- oder -Regressionsmodell basiert.

3. Verfahren nach Anspruch 1 oder 2, wobei die Sensordaten (WTSD) Daten, die an der Windturbine zu Steuerzwecken der Windturbine hinsichtlich Gier- und/oder Nickwinkel, Drehgeschwindigkeit des Rotors, erzeugter Leistung oder erzeugtem Drehmoment verfügbar sind, umfassen.

4. Verfahren nach einem der vorhergehenden Ansprüche, wobei die Sensordaten (WTSD) eine Rotorgeschwindigkeit (RS), eine Nickposition (PP) der Rotorschaufeln (10), ein Generatordrehmoment oder eine Generatorleistung (GT/GP) und einen oder mehrere Rotorschaufelmomente (BM) umfassen.

5. Verfahren nach einem der vorhergehenden Ansprüche, wobei der Zustand (AFCD ST) der Einrichtung (11D, 12D, 14D) zur aktiven Strömungssteuerung eine Information darüber, ob die Einrichtung (11D, 12D, 14D) zur aktiven Strömungssteuerung in Ordnung oder fehlerhaft ist, umfasst.

6. Verfahren nach einem der vorhergehenden Ansprüche, wobei die Leistungsverschlechterung der Einrichtung (11D, 12D, 14D) zur aktiven Strömungssteuerung eine von einer Vielzahl von Kategorien umfasst, wobei jede Kategorie eine Leistungsbandbreite oder eine Leistungsverschlechterung der Einrichtung (11D, 12D, 14D) zur aktiven Strömungssteuerung darstellt.

7. Vorrichtung zum computerimplementierten Überwachen einer Windturbine, wobei die Windturbine einen oberen Abschnitt auf einem Turm umfasst, wobei der obere Abschnitt um eine vertikale Gierachse schwenkbar ist und eine Gondel und einen Rotor mit Rotorschaufeln (10) aufweist, wobei der Rotor an der Gondel befestigt ist und wobei die Rotorschaufeln (10) mit einer Einrichtung (11D, 12D, 14D) zur aktiven Strömungssteuerung bereitgestellt sind und durch Wind um eine horizontale Rotorachse drehbar sind, wobei die Vorrichtung einen Prozessor (PR) umfasst, der dazu konfiguriert ist, zu jedem Zeitpunkt eines oder mehrerer Zeitpunkte während des Betriebs des Windparks die folgenden Schritte durchzuführen:
i) Erhalten von digitalen Betriebsdaten (OD) der Windturbine, wobei es sich bei den Betriebsdaten (OD) um aktuelle Sensordaten (WTSD), die durch eine Vielzahl von an der Windturbine installierten Sensoren erfasst werden, und ein Steuersignal (AFCD CS) zum Steuern der Einrichtung (11D, 12D, 14D) zur aktiven Strömungssteuerung, um einen konkreten Zustand anzunehmen, handelt;
ii) Bestimmen einer Schätzung (ECLI) des Zustands und/oder der Leistungsverschlechterung der Einrichtung (11D, 12D, 14D) zur aktiven Strömungssteuerung durch Verarbeiten der Betriebsdaten (OD) durch ein trainiertes datengetriebenes Modell (DDM), wobei die Betriebsdaten (OD) als eine digitale Eingabe in das trainierte datengetriebene Modell (DDM) eingespeist werden und das trainierte datengetriebene Modell (DDM) die Schätzung (ECLI) des Zustands und/oder der Leistungsverschlechterung der Einrichtung (11D, 12D, 14D) zur aktiven Strömungssteuerung als eine digitale Ausgabe bereitstellt; und
iii) Erzeugen von Steuerbefehlen (CO) für die Windturbine, sodass das Steuern der Einrichtung (11D, 12D, 14D) zur aktiven Strömungssteuerung ordnungsgemäß in die Windturbinensteuerungsstrategie einbezogen wird, um unerwünschte Betriebszustände, die sich aus einem unerwarteten Verhalten der Einrichtung (11D, 12D, 14D) zur aktiven Strömungssteuerung ergeben, zu beseitigen.

8. Vorrichtung nach Anspruch 7, wobei die Vorrichtung (4) dazu konfiguriert ist, ein Verfahren nach einem der Ansprüche 2 bis 6 durchzuführen.

9. Windturbine, umfassend einen oberen Abschnitt auf einem Turm, wobei der obere Abschnitt um eine vertikale Gierachse schwenkbar ist und eine Gondel und einen Rotor mit Rotorschaufeln (10) aufweist, wobei der Rotor an der Gondel befestigt ist und wobei die Rotorschaufeln (10) mit einer Einrichtung (11D, 12D, 14D) zur aktiven Strömungssteuerung bereitgestellt sind und durch Wind um eine horizontale Rotorachse drehbar sind, wobei die Windturbine eine Vorrichtung (4) nach Anspruch 7 oder 8 umfasst.

10. Computerprogrammprodukt mit einem Programmcode, der auf einem nichttransitorischen maschinenlesbaren Träger gespeichert ist, zum Umsetzen eines Verfahrens nach einem der Ansprüche 1 bis 6, wenn der Programmcode auf einem Computer ausgeführt wird.

## Revendications

1. Procédé de surveillance mise en œuvre par ordinateur d'une éolienne, l'éolienne comprenant une section supérieure au sommet d'une tour, la section supérieure pouvant pivoter autour d'un axe de lacet vertical et ayant une nacelle et un rotor avec des pales de rotor (10), le rotor étant fixé à la nacelle et les pales de rotor (10) étant pourvues d'un dispositif de commande de flux actif (11D, 12D, 14D) et pouvant être mises en rotation par le vent autour d'un axe de rotor horizontal, dans lequel, à chaque point temporel d'un ou plusieurs points temporels pendant le fonctionnement de l'éolienne, les étapes suivantes sont réalisées :
i) l'obtention de données de fonctionnement (OD) numériques de l'éolienne, les données de fonctionnement (OD) étant des données de capteur (WTSD) actuelles prises par une pluralité de capteurs installés sur l'éolienne et un signal de commande (AFCD CS) pour commander le dispositif de commande de flux actif (11D, 12D, 14D) afin qu'il adopte un état spécifique ;
ii) la détermination d'une estimation (ECLI) de l'état et/ou de la dégradation de performance du dispositif de commande de flux actif (11D, 12D, 14D)
**caractérisé en ce que**
- l'étape ii) de détermination d'une estimation (ECLI) de l'état et/ou de la dégradation de performance du dispositif de commande de flux actif (11D, 12D, 14D) comprend le traitement des données de fonctionnement (OD) par un modèle piloté par les données (DDM) entraîné, où les données de fonctionnement (OD) sont introduites en tant qu'entrée numérique dans le modèle piloté par les données (DDM) entraîné et le modèle piloté par les données (DDM) entraîné fournit l'estimation (ECLI) de l'état et/ou de la dégradation de performance du dispositif de commande de flux actif (11D, 12D, 14D) en tant que sortie numérique ; et
iii) la génération d'ordres de commande (CO) pour l'éolienne de sorte que la commande du dispositif de commande de flux actif (11D, 12D, 14D) soit correctement incluse dans la stratégie de commande de l'éolienne afin d'éliminer des états de fonctionnement indésirables résultant d'un comportement inattendu du dispositif de commande de flux actif (11D, 12D, 14D).

2. Procédé selon la revendication 1, dans lequel le modèle piloté par les données (DDM) entraîné est basé sur un modèle de classification ou de régresseur de forêt aléatoire.

3. Procédé selon la revendication 1 ou 2, dans lequel les données de capteur (WTSD) comprennent des données disponibles sur l'éolienne à des fins de commande de l'éolienne concernant l'angle de lacet et/ou de pas, la vitesse de rotation du rotor, la puissance générée ou le couple généré.

4. Procédé selon l'une des revendications précédentes, dans lequel les données de capteur (WTSD) comprennent une vitesse de rotor (RS), une position de pas (PP) des pales de rotor (10), un couple ou une puissance de générateur (GT/GP), et un ou plusieurs moments de pale de rotor (BM).

5. Procédé selon l'une des revendications précédentes, dans lequel l'état (AFCD ST) du dispositif de commande de flux actif (11D, 12D, 14D) comprend une information selon laquelle le dispositif de commande de flux actif (11D, 12D, 14D) est sain ou défectueux.

6. Procédé selon l'une des revendications précédentes, dans lequel la dégradation de performance du dispositif de commande de flux actif (11D, 12D, 14D) comprend l'une d'une pluralité de catégories, chaque catégorie représentant une largeur de bande de performance ou de dégradation de performance du dispositif de commande de flux actif (11D, 12D, 14D).

7. Appareil de surveillance mise en œuvre par ordinateur d'une éolienne, l'éolienne comprenant une section supérieure au sommet d'une tour, la section supérieure pouvant pivoter autour d'un axe de lacet vertical et ayant une nacelle et un rotor avec des pales de rotor (10), le rotor étant fixé à la nacelle et les pales de rotor (10) étant pourvues d'un dispositif de commande de flux actif (11D, 12D, 14D) et pouvant être mises en rotation par le vent autour d'un axe de rotor horizontal, l'appareil comprenant un processeur (PR) configuré pour réaliser, à chaque point temporel d'un ou plusieurs points temporels pendant le fonctionnement du parc éolien, les étapes suivantes :
i) l'obtention de données de fonctionnement (OD) numériques de l'éolienne, les données de fonctionnement (OD) étant des données de capteur (WTSD) actuelles prises par une pluralité de capteurs installés sur l'éolienne et un signal de commande (AFCD CS) pour commander le dispositif de commande de flux actif (11D, 12D, 14D) afin qu'il adopte un état spécifique ;
ii) la détermination d'une estimation (ECLI) de l'état et/ou de la dégradation de performance du dispositif de commande de flux actif (11D, 12D, 14D) en traitant les données de fonctionnement (OD) par un modèle piloté par les données (DDM) entraîné, où les données de fonctionnement (OD) sont introduites en tant qu'entrée numérique dans le modèle piloté par les données (DDM) entraîné et le modèle piloté par les données (DDM) entraîné fournit l'estimation (ECLI) de l'état et/ou de la dégradation de performance du dispositif de commande de flux actif (11D, 12D, 14D) en tant que sortie numérique ; et
iii) la génération d'ordres de commande (CO) pour l'éolienne de sorte que la commande du dispositif de commande de flux actif (11D, 12D, 14D) soit correctement incluse dans la stratégie de commande de l'éolienne afin d'éliminer des états de fonctionnement indésirables résultant d'un comportement inattendu du dispositif de commande de flux actif (11D, 12D, 14D).

8. Appareil selon la revendication 7, dans lequel l'appareil (4) est configuré pour réaliser un procédé selon l'une des revendications 2 à 6.

9. Éolienne comprenant une section supérieure au sommet d'une tour, la section supérieure pouvant pivoter autour d'un axe de lacet vertical et ayant une nacelle et un rotor avec des pales de rotor (10), le rotor étant fixé à la nacelle et les pales de rotor (10) étant pourvues d'un dispositif de commande de flux actif (11D, 12D, 14D) et pouvant être mises en rotation par le vent autour d'un axe de rotor horizontal, l'éolienne comprenant un appareil (4) selon la revendication 7 ou 8.

10. Produit de programme informatique avec un code de programme, lequel est stocké sur un support lisible par machine non transitoire, pour mettre en œuvre un procédé selon l'une des revendications 1 à 6 lorsque le code de programme est exécuté sur un ordinateur.
